# EUROPEAN PATENT SPECIFICATION

(11) **EP 1 329 433 B1**
(45) Date of publication and mention of the grant of the patent: **11.03.2015**
(21) Application number: 02380215.0
(22) Date of filing: 22.10.2002
(51) Int. Cl.: C03C 17/00, G02B 1/11, C03C 17/25, C23C 18/12

(54) **Sol-gel process for the preparation of porous coatings, using precursor solutions prepared by polymeric reactions**
Sol-gel Prozess zur Herstellung von porösen Beschichtungen, mittels Ausgangslösungen, die durch polymerische Reaktionen hergestellt wurden
Procédé sol-gel de production de matériau de revêtement poreux par des composés de départ fabriqués par des réactions polymériques

(30) Priority: 24.10.2001 ES 200102382
(43) Date of publication of application: 23.07.2003
(73) Proprietor: CENTRO DE INVESTIGACIONES ENERGETICAS MEDIOAMBIENTALES Y TECNOLOGICAS (C.I.E.M.A.T.), E-28040 Madrid (ES)
(72) Inventor: Morales Sabio, Angel, Dpto. de Energias, 28040 Madrid (ES)
(74) Representative: Del Santo Abril, Natividad

(56) References cited:
- EP-A- 1 052 230
- EP-A- 1 074 526
- GB-A- 2 288 184
- US-A- 4 271 210
- US-A- 4 816 333
- US-A- 5 137 749

## Description

The object of this invention is a process for the preparation of porous coatings composed of mono or multi-component ceramic materials that permits considerably reducing losses due to reflection of visible and infrared light that falls on certain materials.

Anti-reflective coatings are widely used in different applications such as the increase in transmittance and elimination of reflections in glass or plastics, the increase in the absorption of solar radiation in solar collectors, the reduction in reflectivity of metal materials and the production of materials for optical applications, such as lenses, filters or reflectors.

Losses due to reflection are produced due to the difference between the material's refraction index and that of the air. The greater the difference between the refraction indexes, the greater the loss produced by reflection. Anti-reflective coatings are thin sheets of materials that have a refraction index between that of air and the material in question, whose thickness is optimized so that a minimum of interference is produced at the desired wavelengths. Therefore, there are no anti-reflective materials that can be used for every application: it is necessary to use a certain anti-reflective coating depending on the substrate whose reflection losses are to be reduced.

The principal materials used as anti-reflective are dielectric materials (Table 1) whose refraction indexes at a wavelength of 550 nanometres are: silica (n₅₅₀=1.45), titania (n₅₅₀=2.3), alumina (n₅₅₀=1.65). These materials are generally deposited by different techniques such as cathodic spraying, evaporation, chemical deposition in vapour and sol-gel phase.

To vary the refraction index of these materials and to achieve a greater range of applications on different substrates, the production of variable porosity coatings is possible, so that the refraction index is reduced when the porosity of the materials is increased, increasing the material's anti-reflective effect. The increase in porosity of the coatings has the inconvenience of the reduction in their mechanical resistance, for which reason there may exist problems with environmental durability, degradation due to the effects of abrasion or erosion during the coatings' cleaning processes.

**Table 1**

| REFRACTION INDEXES AT 550 nm AND WAVELENGTH RANGE λ OF THE APPLICATION OF PRINCIPAL MATERIALS USED AS ANTI-REFLECTIVE | | |
|---|---|---|
| **Material** | Refrac. Ind. 550 nm | **λ Range** |
| Na₃AlF₆ | 1.35 | <0.2 -10 µm |
| MgF₂ | 1.38 | <0.2 - 5 µm |
| SiO₂ | 1.45 | 0.2 - 8.0 µm |
| Si₂O₃ | 1.55 | 0.3 - 8.0 µm |
| CeF₃ | 1.6 | 0.3 - >2.0 µm |
| Al₂O₃ | 1.65 | 0.2 - 7.0 µm |
| SiO | 1.85 | 0.6 - 7.0 µm |
| ZrO₂ | 2.1 | 0.25 - 7.0 µm |
| CeO₂ | 2.30 | 0.4 - 5.0 µm |
| ZnS | 2.30 | 0.4 - 15.0 µm |
| TiO₂ | 2.30 | 0.4 - 12.0 µm |

### Background of the invention

The preparation of vitreous and crystalline dielectric coatings is one of the principal applications of the sol-gel technique, a simple, economical process applicable to multiple substrate shapes and sizes. Layers with very different compositions have been produced by this process to reduce the reflectivity of different substrates, such as glass, metals and dielectric materials. Amongst this process's advantages is the generation of vitreous structures with very wide variations in composition, which permit great variability in the refraction index obtained. The adherence of these coatings on the different substrates is very high, given that chemical bonds are formed between the coating and the substrate. This fact additionally explains the good thermal and mechanical stability of the coatings. This behaviour together with the good chemical behaviour of the aforementioned ceramic oxides converts the mono or multi-component coatings of these oxides in excellent candidates to be used as anti-reflective coatings.

Various anti-reflective coatings have been produced by means of the sol-gel technique, which can be classified in three groups according to the method of preparing the precursor solution (polymeric or colloidal route) or the subsequent treatment of the coating obtained:
1. Coatings such as those disclosed in the patent document ES 2,153,908 (Scholz, Minnesota Mining and Manufacturing Co.), US 4,816,333 (Lange, Minnesota Mining and Manufacturing Co.) and EP 897,898 (Sculz, Merck), which have in common the use of colloidal precursor solutions. These solutions are characterized in that they are formed by commercial colloidal particles that are stabilized in acid or basic medium, which are going to form the anti-reflective coating once they have been deposited on the substrate. To improve the solutions' wetting capacity on the different substrates, low concentrations of different surfactant additives are used. After the thermal sintering treatment, the solvent evaporates and said colloidal particles produce the anti-reflective coating. The patent US 4,271,210 (Yoldas, Westinghouse) also uses colloidal solutions, but they are prepared from metal alkoxides hydrolized in acid medium in an aqueous or alcoholic solution. These solutions are heated for their peptization to take place and thus obtain a stable colloidal solution. It also uses surfactant additives in concentrations between 30 and 50 mg/l. The use of colloidal precursor solutions leads to the formation of different sized colloids thus making subsequent filtration necessary.
2. Coatings such as those disclosed in patent documents ES 2,063,696 (Sanctis, CSIC), ES 2,148,589 (Durán, CSIC) and EP 1074526A2 (Morales, CIEMAT) in which dense layers of dielectric materials with corrosion protection and anti-reflective properties are produced. Polymeric precursor solutions are used instead of colloidal ones and once the layers produced have densified they have hardly any porosity, for which reason, they have little anti-reflective effect, whilst they are highly protective for different metals.
3. Coatings such as that disclosed in patent US 5,580,819 (Huawen Li, PPG Industries Inc.) in which colloidal solutions are not used. Instead, a metal alkoxide precursor solution, an organic polymer and a surfactant additive in concentrations between 0.1 and 1% in weight are prepared. Once the solution has been deposited on the substrate and the film has densified, a solution to cause the film to be selectively attacked is added thus obtaining a porous, anti-reflective film. As with those coatings that use polymeric precursor solutions, low porosity is obtained.

Consequently, an object of this invention is to prepare vitreous or polycrystalline coatings from different ceramic oxides using the sol-gel method and, more specifically, the polymeric route, without using surfactants and with absolute control over the porosity of the films obtained, up to high levels, on substrates such as solar absorbers, glass, metal substrates and ceramic materials or coatings, to improve their anti-reflective properties.

Document US4271210 discloses the preparation of a colloidal solution, which will lead to layers when deposited on a substrate. Aluminium alkoxide is hydrolized in water at high temperature70-80°C for 10 a 15 minutes and a weak acid is added. Triton X-102 is added in a very low concentration between 30 and 50 mg/l to prevent beading of alumina particles in glass. The solution is vigorously stirred at 80-100°C until the peptization is complete and the solution turns transparent.

Document US5137749 describes a method for forming thick metal oxide films. Hydroxypropyl cellulose is used as an additive to increase the viscosity of a metal alkoxide solution and to obtain higher thicknesses of the film on the substrate, avoiding the appearance of cracks during thermal treatment. The viscosity of the precursor solution is adjusted between 3 and 30 cP. In this document polyethylene glycol is mentioned as other possible agent to increase the viscosity of the solution, but the document discourages its use due to the appearance of cracks during thermal treatment.

Document EP1074526 describes a method for the formation of antireflective films of dense silica, from polymeric solutions, on transparent conducting oxides layers. It consists of the stages of: formulation and preparation of the coating bath by means of solutions of mixtures of tetraehtylorthosilicate (TEOS) with methyltriethoxysilane (MTES) in alcohol with a catalyst, with the gel next forming on the substrate by a controlled immersion and removal of it from the coating bath with the above solution, to later proceed to the drying of the formed gel by evaporation of the solvent and to its sintering by means of a thermal treatment in a controlled atmosphere oven at temperatures between 300°C and 400°C.

### Description of the invention

The process to prepare anti-reflective coatings on different substrates by the sol-gel technique, by means of the use of precursor solutions prepared by the polymeric route, that is the object of this invention, has the innovative element of the use of certain compounds derived from polyethyleneglycol tert-octyl phenyl ether (Triton) as promoting additives of the porosity in concentrations between 5 and 50 g/l. The porosity in the coating is produced during a thermal sintering treatment when.a certain temperature is reached and the combustion of the used additive occurs, and it will increase with the concentration of additive used.

Another distinctive aspect with regard to some of the documents mentioned in the prior art that use Triton in their compositions, is that these compounds behave as surfactants at low concentrations (30-50 mg/l), whilst this effect disappears at high concentrations. These authors use Triton X in very low concentrations as a surfactant agent to improve the wetting capacity of the solutions and obtain homogenous coatings. In the invention process, the polymeric solutions used have excellent wetting capacity, obtaining good homogeneity, for which reason the use of additional surfactants is not necessary, using the Triton at high concentrations as a porosity promoting additive.

The coatings obtained by means of the process that is object of this invention have important advantages with regard to obtaining high porosity and good anti-reflective properties, at the same time maintaining a high degree of control and using a simple, economical process.

The anti-reflective coatings obtained by means of the process that is the object of this invention do not give any protection against corrosion on metal substrates made of steel or silver due to their high porosity, the opposite of that which occurs with coatings produced by the polymeric solution mentioned in the prior art.

### Brief description of the drawings

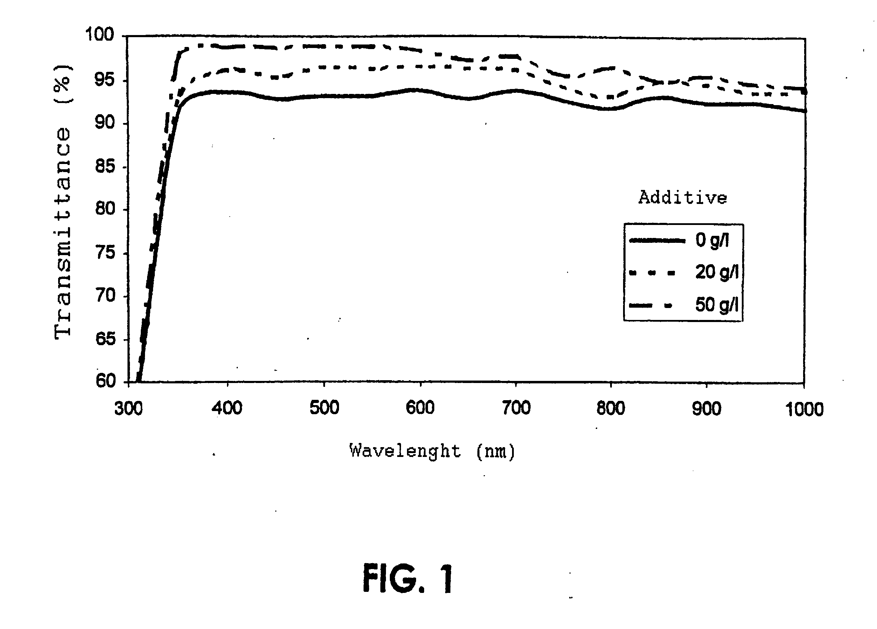

Figure 1 shows the glass transmittance spectrum with a SiO₂ anti-reflective base, made in accordance with the process of this invention.

### Detailed description of a preferred embodiment

### a) Preparation of the solutions

Taking into account the possible types of applications, different mono and multi-component compositions have been studied, which include 0-100% molar of SiO₂, 0-100% molar of ZrO₂, 0-100% molar of TiO₂, 0-100% molar of Al₂O₃ and 0-80% molar of B₂O₃, so that the compositions used are:
(100-x) SiO₂-x MₙO₂ with x=0-40% with MₙO₂=Al₂O₃, TiO₂, ZrO₂, B₂O₃
(100-x) TiO₂-x MₙO₂ with x=0-40% with MₙO₂=Al₂O₃, SiO₂, ZrO₂, B₂O₃
(100-x) Al₂O₃-x MₙO₂ with x=0-40% with MₙO₂=SiO₂, TiO₂, ZrO₂, B₂O₃

Different commercial metal alkoxides have been used as precursors for the different oxides.

The solutions are prepared by dissolving the alkoxides in distilled water and alcohol in the presence of a catalyst and an additive, which makes the coating porous.

The water concentration depends on the nature of the alkoxide used, and the water/alkoxide ratio can range from zero to more than the stoichiometric ratio necessary to hydrolize all the alcohol radicals of the alkoxides.

The alcohol used can be that corresponding to the alcohol radicals present in the alkoxide, a mixture of this with ethanol or, directly, ethanol. The initial alcohol/alkoxide ratio ranges from 2 to 10 and its final concentration depends on the desired viscosity, ranging from 10 to 25.

Hydrochloric acid, nitric acid, sulphuric acid and acetic acid are be used as catalysts depending on the composition of the coating and the substrate to be coated. The catalyst concentrations depend on the hydrolysis kinetics and on the condensation of the alkoxides used. The pH suitable for obtaining stable solutions ranges from 0.5 to 3.

To obtain multi-component coatings, the alkoxide sequence and addition times should take into account the hydrolysis rates of each one of them. In general, a prehydrolyis of the slowest ones is carried out, and those with quicker hydrolysis are added at the end to favour the formation of multi-component units at a molecular level.

Alkoxides that are very sensitive to humidity should be added very slowly in an anhydrous atmosphere to avoid the precipitation of insoluble hydrates.

Mono and multi-component coatings can be obtained by processes in one or more stages, at different pH values and water/alkoxide ratios, to control the hydrolysis process and to obtain coatings with different densities.

Compounds derived from Polyethyleneglycol tert-octyl phenyl ether (Triton) are used as additives to control the coating porosity, the porosity increasing when the additive content is increased. The quantity of Triton ranges from 5 to 50g/l in accordance with the level of porosity necessary to obtain the required refraction index.

Once a homogeneous, transparent solution is obtained, it is left to age for between 24 hours and one week. The coatings are made when the hydrolysis and polymerization process produces stable solutions, with a slight variation of viscosity with time.

The solutions' stability and rheological properties are controlled through their density and viscosity, measured by pycnometry and by the Ostwald method.

### b) Preparation of the substrates and film deposition

The substrates used for the anti-reflective coating deposition are those materials whose reflectivity we aim to reduce. Any material that does not degrade after thermal treatment to densify the anti-reflective film can be used, and this is usually performed at a temperature of between 400 and 500°C.

The substrates upon which anti-reflective films have been deposited are: glass, aluminium, tin-doped indium oxide glass, polished monocrystalline silicon and different selective solar absorbers.

The surface conditions of the materials that have to be coated are essential for the stability of the coatings, as well as for their anti-reflective capacity. The substrate's surface should be free from oxide and greasy substances. The glass substrates, ceramic materials and selective solar absorbers are washed with detergent in an ultrasound bath, rinsed with distilled water and kept in ethyl alcohol to be hydroxylated. The metal substrates are degreased and chemically attacked, to eliminate the layer of oxide. The polished monocrystalline silicon chips are cleaned in a hydrofluoric acid solution at 20°C for one minute.

The film deposition can be carried out by immersion or spraying. The first method is more suitable for large, regular shaped pieces, the majority of which work in an air atmosphere. Spraying is more suitable when it is necessary to coat a great number of pieces, especially if they are small, given that it is performed by means of line processes.

In the immersion process, the pieces are submerged in the solution and are extracted at a constant rate. The thickness of the film deposited is in accordance with the extraction rate, the contact angle between the piece and the solution and the viscosity of the solution. The deposition process has a great influence on the quality of the coating: the extraction rates should not exceed 30 cm/min to avoid inhomogeneities and waves; atmospheric humidity, which in some cases facilitates the hydrolysis of the residual alkoxide groups and the rapid gelling of the film, cause hydrate precipitation, that, in turn, produces inhomogeneities and is the source of cracks in the coating.

The process of deposition by spraying is controlled by several parameters of the equipment and by the conditions of the solution. Specifically, the spraying rate, particle size and distribution, the gas medium, nozzle type and size, and the viscosity, density and concentration of the solution.

After the deposition, a drying stage is carried out to eliminate the residual solvent that is trapped in the gel's pores. The treatment temperature ranges from room temperature to 150°C and the process duration ranges from 5 to 30 minutes.

The densification of the films is produced by thermal treatment, whose temperature, heating rate, time and atmosphere are determined by various factors: solution composition and concentration, thermal stability of the substrate and necessary degree of densification. In general, in the known processes, when the temperature and thermal treatment time are increased, greater densification of the film occurs, reducing its porosity. With this invention's process, on the contrary, when the temperature and thermal treatment time are increased, the porosity of the coating is increased due to the combustion of the additive used. For the studied compositions, the treatment temperature ranges from 400 to 600°C, the heating rates from 5 to 100°C/min, and the treatment times from 10 to 60 minutes and the atmospheres used were air, nitrogen and argon.

The thickness of the coatings obtained varies in accordance with the solution composition and the deposition parameters. Homogeneous films ranging from 50 to 300 nm in thickness have been produced.

The mechanical properties of the anti-reflective coating produced are excellent, permitting their cleaning with water and non-abrasive detergents.

### c) Properties of the coated materials.

The optical properties of the coated substrates have been studied using reflectance and transmittance spectrophotometric measurements in the solar range (300 to 2500 nm) with a Perkin-Elmer, Lambda 9 model, spectrophotometer with a barium sulphate integrator sphere. The hemispheric reflectivity integrated with the AM 1.5G solar spectrum has been reduced in all the substrates: from 0.076 to 0.028 in glass substrates, from 0.371 to 0.131 in monocrystalline silicon substrates, from 0.911 to 0.822 in electropolished aluminium substrates, from 0.851 to 0.761 in carbon steel substrates coated by electrolysis with Ni and Au, and finally, from 0.178 to 0.078 in a silica cermet with gold particles, used as a selective solar absorber.

### EXAMPLES

Example 1) is a porous SiO₂ coating on an glass borosilicate substrate, example 2) is a porous TiO₂ coating on a commercial electropolished aluminium substrate, example 3) is a porous SiO₂ coating on a carbon steel substrate coated by electrolysis with nickel and gold, example 4) is a porous 70 SiO₂-30 TiO₂ coating on a polished monocrystalline silicon chip and example 5) is a porous 80 SiO₂-20 ZrO₂ coating on a selective solar absorber composed of an aluminium substrate with a SiO₂₋ Pt coating of a high absorbance of solar radiation.

### Example 1) porous SiO₂ coating on a glass borosilicate substrate.

The precursor solution is prepared starting from tetraethyl orthosilicate (TEOS), ethanol and distilled water, using sulphuric acid as a catalyst. The hydrolysis took place in two stages, varying the acid and water concentrations. In the first stage, at reflux, at 60°C for 90 minutes, a prehydrolysis of the alkoxide was performed with a molar ratio TEOS/H₂SO₄/H₂O = 1/0.0002/1 and ethanol between 10 and 25 molar.

In the second stage, at reflux, at 40°C and for 60 minutes, the quantity of water and sulphuric acid is increased until reaching TEOS/H₂SO₄/H₂O = 1/0.1/5. When the gel reached room temperature, Triton X-100 was added at different concentrations until reaching 50 g/l. Once the solution has been agitated it can be used to form anti-reflective layers. The coatings were prepared by immersion, dried at 60°C for 15 minutes and sintered in an oven, in air, for 60 minutes at 500°C. The maximum thickness obtained for a single layer without cracks was 250 nm. Spectrophotometric measurements were made of the anti-reflective effect of the deposited film: the transmittance of the uncoated glass substrate increasing from 0.924 to 0.972 with a porous silica anti-reflective coating.

As can clearly be seen in figure 1, the transmittance of the glass increases as the triton X-100 content increases. The transmittance of the samples with 40 and 50 g/l of triton is very similar, but the mechanical properties of the 40 g/l sample are better as it is less porous, for which reason, this value is considered to be the optimum one. The reflectivity of the sample with 0 g/l is that which corresponds to a conventional polymeric gel, such as those stated in group 3 of the methods to produce anti-reflective coatings by sol-gel, disclosed in the introduction. In this figure, the important effect of the additive used as a promoting agent of the material porosity as regards said polymeric gels is evident.

### Example 2) porous TiO₂ coating on a commercial electropolished aluminium substrate.

The commercial electropolished aluminium substrates are cleaned, for between 4 and 10 seconds, in a solution of 2.5% in weight of hydrofluoric acid, rinsed with distilled water and air-dried.

The porous TiO₂ solution is prepared starting from the hydrolysis of tetrabutyl orthotitanate (TBT), using sulphuric acid as a catalyst, with the following molar ratio: Ethanol/TBT/H₂SO₄/H₂O = 20/0.5/0.5/1. The solution was left to age for 24 hours and 30 g/l of triton X-305 were added.

The films were deposited by immersion, with extraction rates of between 8 and 20 cm/min, they were dried at room temperature for 15 minutes and sintered in the oven for 45 minutes at 500°C.

The hardness and abrasion resistance of the coated substrate are not good due to the loss of mechanical properties of the aluminium after the thermal treatment, and the corrosion resistance is not improved. The reflectivity of the coated substrates was reduced from 0.91 to 0.82.

### Example 3) porous SiO₂ coating on a carbon steel substrate with an electrolytic coating of nickel and gold.

The carbon steel substrate was mechanically polished until a mirror finish was obtained and it was coated by electrolysis, first with a 10 micron nickel layer and, subsequently, with a 1 micron gold layer.

The silica precursor solution was prepared in a single stage starting from TEOS, hydrolyzed in acid medium with HCl with a molar ratio TEOS/Ethanol/HCl/H₂O = 1/15/0.1/4. The solution was left to age for 24 hours and 20 g/l of Triton X-100 were added.

The deposition of the films was carried out by immersion with variable rates ranging from 4 to 25 cm/min and they were thermally treated at 500°C for 1 hour. The coatings obtained were homogeneous and did not have cracks in thicknesses lower than 200 nm. The reflectivity of the coated substrates is reduced from 0.85 to 0.76.

### Example 4) porous 70 SiO₂-30 TiO₂ coating on a polished monocrystalline silicon chip.

The monocrystalline silicon chips are cleaned for 1 minute in a hydrofluoric acid solution at 20°C, rinsed with distilled water and air-dried. The precursor solution is prepared in two stages: SiO₂ is prepared in similar manner to that of example 3), hydrolyzing the tetrabutyl orthotitanate (TBT) in the previous solution to obtain the ratio 70 SiO₂-30 TiO₂.

The solar reflectance was reduced from 0.371 to 0.131 in monocrystalline silicon substrates, and from 0.370 to 0.015 at the 600 nm wavelength.

### Example 5) porous 80 SiO₂-20 ZrO₂ coating on a selective solar absorber composed of an aluminium substrate with a SiO₂₋Pt coating of a high absorbance of solar radiation.

The precursor solution is prepared in two stages. First, an anhydrous solution of zirconium isopropoxide (ZrIP) in ethanol, catalysed with H₂SO₄ with the molar ratio: ZrIP/ethanol/H₂SO₄ = 1/10/0.8 and it was agitated until a total transparency was obtained (S₁ solution). Secondly, solutions were prepared with TEOS, water, ethanol and catalysed with H₂SO₄ and acetic acid according to the ratio TEOS/H₂O/ethanol/H₂SO₄ = 1/4/10/0.2. After agitating for an hour this solution (S₂ₓ) was aged for 6 hours.

The final solution was prepared in the second stage: ZrO₂: S₁ + 4 moles of H₂= agitation for 1 hour.
SiO₂ 80 - ZrO₂ 20: S₁ 20 drop by drop on S₂ₓ agitation for 1 hour.

In some cases 25% of the water has been replaced by acetic acid.

The solution was left to age for 24 hours and 5 g/l of Triton X-405 were added and then they were used as coatings, which were dried and thermally treated at 500°C. The resulting layers were transparent and homogenous in all cases. The maximum thickness without cracks was 300 nm.

The solar reflectivity integrated with the AM1.5G solar spectrum was reduced from 0.178 to 0.078.

## Claims

1. Process for the preparation of porous coatings, following the polymeric route, by means of the sol-gel technique, with the precursor solution composition being 0-100% molar of SiO₂, 0-100% molar of Zr0₂, 0-100% molar of TiO₂, 0-100% molar of Al₂0₃ and 0-80% of B₂0₃, so that the compositions used are:
(100-x) SiO₂-xMetal Oxide with x=0-40% where the Metal Oxide is selected from the group consisting in Al₂O₃, TiO₂, ZrO₂, B₂O₃
(100-x) TiO₂-xMetal Oxide with x=0-40% where the Metal Oxide is selected from the group consisting in Al₂O₃, SiO₂, ZrO₂, B₂O₃
(100-x) Al₂O₃-xMetal Oxide with x=0-40% where the Metal Oxide is selected from the group consisting in SiO₂, TiO₂, ZrO₂, B₂O₃
which comprises the following steps:
a) preparation of the precursor solution by dissolving and hydrolyzing one or several metal alkoxides, as oxide precursors, in a mixture of water and alcohol in the presence of an acid catalyst and an additive, in a pH range from 0,5 to 3; the transparent and homogeneous solution obtained is allowed to age between 24 hours to one week;
b) coating the substrate with the precursor solution obtained from step a) by inmersion or spraying;
c) drying step to eliminate the residual solvent;
d) proceeding with a thermal sintering treatment that causes the combustion of the additive used, on reaching a certain temperature;
**characterized in that** the additive used in the preparation of the precursor solution is a compound derived from Polyethyleneglycol tert-octyl phenyl ether (Triton) and is added in concentrations ranging from 5 to 50 g/l as precursor additive of the coating porosity.

2. Process for the preparation of porous coatings, following the polymeric route, by means of the sol-gel technique, as claimed in claim 1, **characterized in that** the initial alcohol/alkoxide ratio ranges from 2 to 10 and its final concentration depends on the desired viscosity, ranging from 10 to 25.

3. Process for the preparation of porous coatings, following the polymeric route, by means of the sol-gel technique, as claimed in claim 1, **characterized in that** acid catalyst is selected from the group consisting of hydrochloric acid, nitric acid, sulphuric acid and acetic acid.

4. Process for the preparation of porous coatings, following the polymeric route, by means of the sol-gel technique, as claimed in claim 1, **characterized in that** the alcohol in the mixture of water and alcohol is ethanol.

5. Process for the preparation of porous coatings, following the polymeric route, by means of the sol-gel technique, as claimed in claim 1, **characterized in that** the thermal sintering treatment is performed at a heating rate ranging from 5 to 100°C/mm, a treatment temperature from 400 to 600°C, a treatment time from 10 to 60 minutes, and the atmospheres used were air, nitrogen and argon.

6. Process for the preparation of porous coatings, following the polymeric route, by means of the sol-gel technique, as claimed in claim 1, **characterized in that** the drying step to eliminate the residual solvent is carried out at temperatures ranges from room temperature to 150° during 5 to 30 minutes.

## Patentansprüche

1. Verfahren zur Vorbereitung von porösen Beschichtungen, das mittels der Sol-Gel-Technik und unter Befolgung des Polymer-Pfads durchgeführt wird, wobei die Zusammensetzung der Präcursorlösung 0-100 Molprozent von SiO₂, 0-100 Molprozent von ZrO₂, 0-100 Molprozent von TiO₂, 0-100 Molprozent von Al₂O₃ und 0-80 Molprozent von B₂O₃ entspricht, sodass die verwendeten Zusammensetzungen Folgendem entsprechen:
(100-x) SiO₂-xMetalloxid, wobei x = 0-40 % entspricht und das Metalloxid aus der Gruppe ausgewählt wird, die aus Al₂O₃, TiO₂, ZrO₂, B₂O₃ besteht,
(100-x) TiO₂-xMetalloxid, wobei x = 0-40 % entspricht und das Metalloxid aus der Gruppe ausgewählt wird, die aus Al₂O₃, SiO₂, ZrO₂, B₂O₃ besteht,
(100-x) Al₂O₃-xmetalloxid, wobei x = 0-40 % entspricht und das Metalloxid aus der Gruppe ausgewählt wird, die aus SiO₂, TiO₂, ZrO₂, B₂O₃ besteht,
das die folgenden Schritte umfasst:
a) die Vorbereitung der Präcursorlösung, indem ein Metallalkoholat oder mehrere Metallalkoholate als Oxidvorläuferstoffe in einer Mischung aus Wasser und Alkohol in Gegenwart eines sauren Katalysators und eines Zusatzstoffes in einem pH-Bereich von 0,5 bis 3 aufgelöst oder hydrolysiert werden, wobei der erhaltenen transparenten und homogenen Lösung erlaubt wird, zwischen 24 Stunden und einer Woche zu altern;
b) die Beschichtung des Substrats mit der im Schritt a) erhaltenen Präcursorlösung mittels Eintauchen oder Besprühen;
c) ein Trocknungsschritt zur Eliminierung des restlichen Lösungsmittels;
d) eine anschließende thermische Sinterbehandlung, die bei Erreichung einer bestimmten Temperatur die Verbrennung des verwendeten Zusatzstoffes verursacht;
**dadurch gekennzeichnet, dass** der zur Vorbereitung der Präcursorlösung verwendete Zusatzstoff eine Verbindung ist, die aus Polyethylenglykol tert-octylphenyl-ether (Triton) erhalten und in einer Konzentration von 5 bis 50 g/l als Vorprodukt des Zusatzstoffs der Beschichtungsporosität hinzugefügt wird.

2. Verfahren zur Vorbereitung von porösen Beschichtungen, das mittels der Sol-Gel-Technik und unter Befolgung des Polymer-Pfads durchgeführt wird, nach Anspruch 1, **dadurch gekennzeichnet, dass** das anfängliche Alkohol/Alkoholat-Verhältnis von 2 bis 10 reicht und dessen endgültige Konzentration von der gewünschten Viskosität im Bereich von 10 bis 25 abhängt.

3. Verfahren zur Vorbereitung von porösen Beschichtungen, das mittels der Sol-Gel-Technik und unter Befolgung des Polymer-Pfads durchgeführt wird, nach Anspruch 1, **dadurch gekennzeichnet, dass** der saure Katalysator aus der Gruppe ausgewählt wird, die aus Salzsäure, Salpetersäure, Schwefelsäure und Essigsäure besteht.

4. Verfahren zur Vorbereitung von porösen Beschichtungen, das mittels der Sol-Gel-Technik und unter Befolgung des Polymer-Pfads durchgeführt wird, nach Anspruch 1, **dadurch gekennzeichnet, dass** es sich bei dem Alkohol in der Mischung aus Wasser und Alkohol um Ethanol handelt.

5. Verfahren zur Vorbereitung von porösen Beschichtungen, das mittels der Sol-Gel-Technik und unter Befolgung des Polymer-Pfads durchgeführt wird, nach Anspruch 1, **dadurch gekennzeichnet, dass** die thermische Sinterbehandlung bei einer Aufheizgeschwindigkeit von 5 bis 100 °C/mm, einer Behandlungstemperatur von 400 bis 600 °C und einer Behandlungszeit von 10 bis 60 Minuten durchgeführt wird und die verwendeten Atmosphären Luft, Stickstoff und Argon waren.

6. Verfahren zur Vorbereitung von porösen Beschichtungen, das mittels der Sol-Gel-Technik und unter Befolgung des Polymer-Pfads durchgeführt wird, nach Anspruch 1, **dadurch gekennzeichnet, dass** der Trocknungsschritt zur Eliminierung des restlichen Lösungsmittels bei Temperaturen durchgeführt wird, die während 5 bis 30 Minuten von der Raumtemperatur bis 150 °C reichen.

## Revendications

1. Procédé pour la préparation de revêtements poreux, suivant la voie polymérique, par la technique sol-gel, avec la composition de solution précurseur étant 0-100% en mole de SiO₂, 0-100% en mole de ZrO₂, 0-100% en mole de TiO₂, 0-100% en mole de Al₂0₃ et 0-80% de B₂0₃, pour que les compositions utilisées soient :
(100-x) SiO₂-xOxyde métallique avec x=0-40% où l'Oxyde métallique est sélectionné dans le groupe composé de Al₂O₃, TiO₂, ZrO₂, B₂O₃,
(100-x) TiO₂-xOxyde métallique avec x=0-40% où l'Oxyde métallique est sélectionné dans le groupe composé de Al₂O₃, SiO₂, ZrO₂, B₂O₃,
(100-x) Al₂O₃-xOxyde métallique avec x=0-40% où l'Oxyde métallique est sélectionné dans le groupe composé de SiO₂, TiO₂, ZrO₂, B₂O₃,
qui comprend les étapes suivantes :
a) préparation de la solution précurseur en dissolvant et en hydrolysant un ou plusieurs alcoxydes métalliques, en tant que précurseurs d'oxyde, dans un mélange d'eau et d'alcool en présence d'un catalyseur acide et d'un additif, dans une gamme de pH de 0,5 à 3 ; la solution transparente et homogène obtenue peut vieillir de 24 heures à une semaine ;
b) revêtir le substrat avec la solution précurseur obtenue au cours de l'étape a) par immersion ou pulvérisation ;
c) étape de séchage pour éliminer le solvant résiduel ;
d) procéder à un traitement thermique de frittage qui provoque la combustion de l'additif utilisé, lorsqu'une certaine température est atteinte ;
**caractérisé en ce que** l'additif utilisé dans la préparation de la solution précurseur est un composé dérivé de polyéthylèneglycol tert-octyl phényl éther (Triton) et qu'il est ajouté dans des concentrations allant de 5 à 50 g/l en tant qu'additif précurseur de la porosité de revêtement.

2. Procédé pour la préparation de revêtements poreux, suivant la voie polymérique, par la technique sol-gel, tel que revendiqué dans la revendication 1, **caractérisé en ce que** le rapport initial alcool/alcoxyde va de 2 à 10 et sa concentration finale dépend de la viscosité désirée, allant de 10 à 25.

3. Procédé pour la préparation de revêtements poreux, suivant la voie polymérique, par la technique sol-gel, tel que revendiqué dans la revendication 1, **caractérisé en ce que** le catalyseur acide est sélectionné dans le groupe composé de l'acide chlorhydrique, acide nitrique, acide sulfurique et acide acétique.

4. Procédé pour la préparation de revêtements poreux, suivant la voie polymérique, par la technique sol-gel, tel que revendiqué dans la revendication 1, **caractérisé en ce que** l'alcool dans le mélange d'eau et d'alcool est de l'éthanol.

5. Procédé pour la préparation de revêtements poreux, suivant la voie polymérique, par la technique sol-gel, tel que revendiqué dans la revendication 1, **caractérisé en ce que** le traitement thermique de frittage est réalisé à un taux de chauffage allant de 5 à 100 °C/mm, une température de traitement de 400 à 600 °C, une durée de traitement de 10 à 60 minutes, et **en ce que** les atmosphères utilisées ont été l'air, l'azote et l'argon.

6. Procédé pour la préparation de revêtements poreux, suivant la voie polymérique, par la technique sol-gel, tel que revendiqué dans la revendication 1, **caractérisé en ce que** l'étape de séchage pour éliminer le solvant résiduel est réalisée à des températures allant de la température ambiante à 150 °C durant 5 à 30 minutes.
